# EUROPEAN PATENT APPLICATION

(11) **EP 2 961 061 A1**
(43) Date of publication of application: **30.12.2015**
(21) Application number: 15172880.5
(22) Date of filing: 19.06.2015
(51) Int. Cl.: H02P 23/14

(54) **INFORMATION PROCESSING APPARATUS, INFORMATION PROCESSING METHOD, AND PROGRAM**

(30) Priority: 27.06.2014 JP 2014132624
(71) Applicant: OMRON CORPORATION, Kyoto, Kyoto 600-8530 (JP)
(72) Inventor: FUJII, Takashi, Kyoto, Kyoto 600-8530 (JP); NAMIE, Masaki, Kyoto, Kyoto 600-8530 (JP); HORI, Mikiko, Kyoto, Kyoto 600-8530 (JP)
(74) Representative: Horn Kleimann Waitzhofer Patentanwälte PartG mbB

(57) **Abstract**

An information processing apparatus creates a model of an object with high accuracy. Simulation means receives a series of simulation command values, calculates a series of simulation position or speed values of a controlled object in response to the series of simulation command values, and outputs them. Control means provides the simulation means with the series of simulation command values and displays the series of simulation values. During the control cycles of the controlled object, the control means acquires a series of actual command values and a series of actual position or speed values of the object from the control apparatus. The control means provides the simulation means with the series of actual command values serving as the series of simulation command values. The control means displays the series of actual values to be compared with the series of simulation values.

## Description

### FIELD

The present invention relates to an information processing apparatus that communicates with a control apparatus that controls the operations of an object to be controlled, an information processing method, and a program.

### BACKGROUND

Conventionally, sequential control is employed for production lines or the likes. To achieve sequential control, a programmable logic controller (PLC) is used. Also, a support apparatus is known, which is to be connected to a PLC and supports the development of the PLC. A support apparatus is typically realized by a PC (personal computer).

JP 2009-289131A discloses a sampling trace function as a debugging function for verifying that a controller such as a PLC is operating properly. Specifically, the sampling trace function is the function of acquiring (sampling), in cycles (sampling cycles), the data (trace data) that shows the state of a specified device at a specified timing, and storing the acquired trace data into a predetermined memory (sampling trace memory).

JP 2009-289131A is an example of background art.

The following is an examination of a simulation of a PLC system made up of actual apparatuses, conducted on an information processing apparatus such as a PC. In this case, a model, which represents an object to be controlled (actual apparatus) by a mathematical expression, is generated on a PC (personal computer), and the operations of a control-target machine are simulated on the PC by using a model of the PLC prepared in advance.

However, the command value or output value (manipulated variable) transmitted (output) from the model of the PLC to the model of the object to be controlled does not necessarily match the command value or output value (manipulated variable) transmitted from the PLC (actual apparatus) to the control-target object (actual apparatus). This is because the PLC (actual apparatus) transmits a corrected command value to the control-target object by performing feedback control.

Therefore, in such cases, it is difficult for the user to create (correct) the model of the control-target object with high accuracy, even if reference is made to the simulation results.

### SUMMARY

The present invention is made in view of the above problems, and an objective thereof is to provide an information processing apparatus, an information processing method, and a program that allow for the creation with high accuracy of a model of an object to be controlled.

According to one aspect of the present invention, an information processing apparatus simulates an operation of an object to be controlled by a control apparatus and causes display means to display a simulation result. The information processing apparatus includes: simulation means for receiving an input of a series of simulation command values, calculating a series of simulation values of a position or speed of the control-target object that operates in response to the series of simulation command values, and outputting the series of simulation values; control means for providing the simulation means with the series of simulation command values and causing the display means to display the series of simulation values output by the simulation means; and communication means for communicating with the control apparatus. The control means is further configured: to acquire a series of actual command values and a series of actual values of the position or speed of the control-target object from the control apparatus via the communication means, the series of actual command values being output by the control apparatus at predetermined intervals in control cycles for controlling the operation of the control-target object, and the series of actual values being acquired by the control apparatus at the predetermined intervals in the control cycles; to provide the simulation means with the series of actual command values serving as the series of simulation command values; and to cause the display means to display the series of actual values in a mode where the series of actual values can be compared with the series of simulation values calculated by the simulation means using the series of actual command values.

Preferably, the control apparatus is further configured to transmit the series of actual command values to the control-target object at intervals of a first time period, and the control means acquires, from the control apparatus, the series of actual command values and the series of actual values at intervals of a second time period that is longer than the first time period, the series of actual command values and the series of actual values being transmitted from the control apparatus during the second time period.

Preferably, the control apparatus transmits, to the control-target object, the series of command values with respect to a plurality of variables. The control means is configured: to receive an input operation for specifying, from among the plurality of variables, a variable to be input to a model; and to acquire, from the control apparatus, the series of actual command value with respect to the specified variable and the series of actual values that are based on the series of actual command values.

Preferably, the control means is configured to cause the display means to display a graph showing the series of simulation values and the series of actual values in association with the series of actual command values.

Preferably, the control means includes a computer and a simulation control program executed by the computer.

Preferably, the simulation means includes a computer, a simulation program executed by the computer, and data defining the control-target object.

Preferably, the simulation program is a program that is the same for each of a plurality of objects to be controlled. The simulation means: has the data for each of the plurality of objects to be controlled; and is configured to calculate the series of simulation values for each of the plurality of objects to be controlled and to output the series of simulation values.

Preferably, the simulation means includes a computer and a simulation program for the object to be controlled executed by the computer.

Preferably, the simulation means: has the simulation program for each of a plurality of objects to be controlled; and is configured to calculate the series of simulation values for each of the plurality of objects to be controlled, and outputs the series of simulation values.

According to another aspect of the present invention, an information processing method is performed in an information processing apparatus that simulates an operation of an object to be controlled by a control apparatus and that causes display means to display a simulation result. The information processing method includes: a step of receiving an input of a series of simulation command values, calculating a series of simulation values of a position or speed of the object to be controlled that operates in response to the series of simulation command values, and outputting the series of simulation values; a step of providing simulation means with the series of simulation command values and causing the display means to display the series of simulation values output by the simulation means; a step of communicating with the control apparatus; a step of acquiring a series of actual command values and a series of actual values of the position or speed of the object to be controlled from the control apparatus via communication means, the series of actual command values being output by the control apparatus at predetermined intervals in control cycles for controlling the operation of the object to be controlled, and the series of actual values being acquired by the control apparatus at the predetermined intervals in the control cycles; a step of providing the simulation means with the series of actual command values serving as the series of simulation command values; and a step of causing the display means to display the series of actual values in a mode where the series of actual values can be compared with the series of simulation values calculated by the simulation means using the series of actual command values.

According to yet another aspect of the present invention, a program controls an information processing apparatus that simulates an operation of an object to be controlled by a control apparatus and that causes display means to display a simulation result. The program causes a processor of the information processing apparatus to perform: a step of receiving an input of a series of simulation command values, calculating a series of simulation values of a position or speed of the object to be controlled that operates in response to the series of simulation command values, and outputting the series of simulation values; a step of providing simulation means with the series of simulation command values and causing the display means to display the series of simulation values output by the simulation means; a step of communicating with the control apparatus; a step of acquiring a series of actual command values and a series of actual values of the position or speed of the object to be controlled from the control apparatus via communication means, the series of actual command values being output by the control apparatus at predetermined intervals in control cycles for controlling the operation of the object to be controlled, and the series of actual values being acquired by the control apparatus at the predetermined intervals in the control cycles; a step of providing the simulation means with the series of actual command values serving as the series of simulation command values; and a step of causing the display means to display the series of actual values in a mode where the series of actual values can be compared with the series of simulation values calculated by the simulation means using the series of actual command values.

According to the present invention, it is possible to create with high accuracy a model of the object to be controlled.

### BRIEF DESCRIPTION OF THE DRAWINGS

Fig. 1 is a schematic diagram showing an overall configuration of a PLC system according to an embodiment of the present invention.
Fig. 2 is a schematic diagram showing a configuration of the hardware of a CPU unit 13 according to the embodiment of the present invention.
Fig. 3 is a schematic diagram showing a configuration of the hardware of a PC 8, which is, when used, connected to the CPU unit 13 according to the embodiment of the present invention.
Fig. 4 is a schematic diagram showing a configuration of software executed in the CPU unit 13 according to the embodiment of the present invention.
Fig. 5 is a schematic diagram showing a configuration of the software of the PC 8, which is, when used, connected to the CPU unit 13 according to the embodiment of the present invention.
Fig. 6 is a block diagram illustrating a functional configuration of a PLC system SYS.
Fig. 7 is a flowchart illustrating various processes executed by the PLC system SYS in response to a user instruction.
Fig. 8 is a flowchart illustrating the details of the process performed at Step S12 of Fig. 7.
Fig. 9 is a flowchart illustrating the details of the process performed at Step S 14 of Fig. 7.
Fig. 10 is a diagram illustrating an example of an image to be displayed by a display 87.
Fig. 11 is a schematic diagram illustrating a technical idea of the invention.
Fig. 12 is a diagram illustrating a specific mode of a simulation control means.
Figs. 13A and 13B are diagrams showing a first mode of a simulation execution means.
Figs. 14A and 14B are diagrams showing a second mode of the simulation execution means.

### DETAILED DESCRIPTION

The following provides a detailed description of an embodiment of the present invention with reference to the drawings. It should be noted that elements in the drawings that are identical or equivalent to one another will be given the same reference numeral, and a description thereof will not be repeated.

### <A. Technical Idea of the Invention>

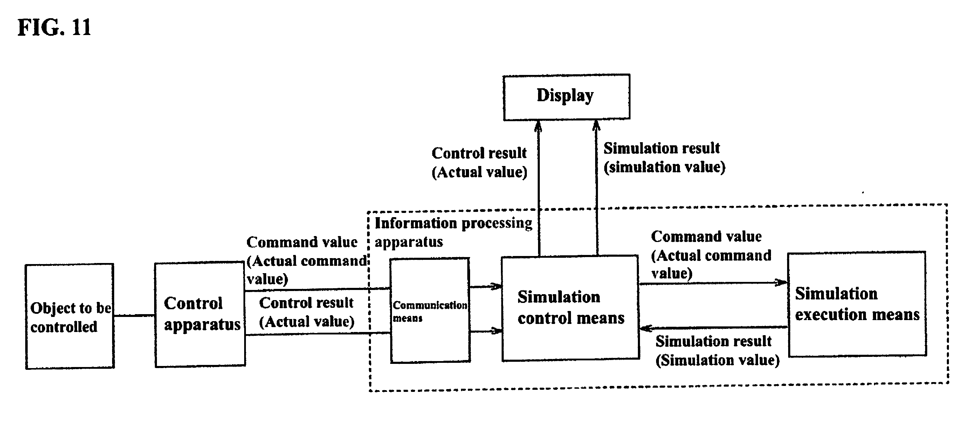

Fig. 11 is a schematic diagram illustrating a technical idea according to the embodiment of the invention. Referring Fig. 11, an information processing apparatus (PC) simulates the operations of an object to be controlled by a control apparatus (PLC), and displays the results of the simulation on a display, which is a display means. The information processing apparatus includes a simulation execution means, a simulation control means, and a communication means.

The simulation execution means receives an input of a series of simulation command values, calculates a series of simulation values of the position or speed of the object to be controlled that operates in response to the series of simulation command values, and outputs the series of simulation values. The simulation control means provides the simulation execution means with the series of simulation command values, and causes the display to display the series of simulation values output by the simulation execution means. The communication means communicates with the control apparatus.

The simulation control means further performs the following processes. The simulation control means acquires a series of actual command values and a series of actual values of the position or speed of the object to be controlled from the control apparatus via the communication means, the series of actual command values being output by the control apparatus at predetermined intervals in control cycles for controlling the operation of the object to be controlled, and the series of actual values being acquired by the control apparatus at the predetermined intervals in the control cycles. The simulation control means provides the simulation execution means with the series of actual command values serving as the series of simulation command values. The simulation control means causes the display to display the series of actual values in a mode where the series of actual values can be compared with the series of simulation values calculated by the simulation execution means using the series of actual command values.

According to the above configuration, the user can create (correct) with high accuracy the model of the object to be controlled by using the information processing apparatus, with reference to the simulation results displayed by the display.

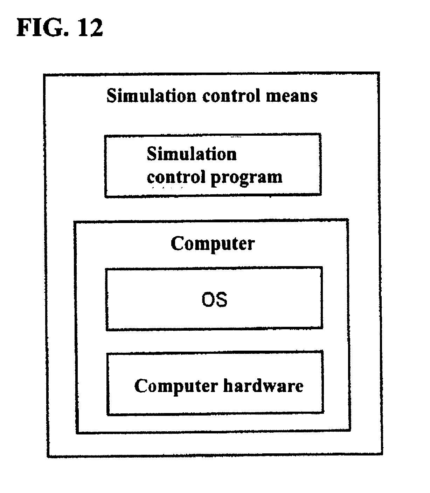

Fig. 12 is a diagram illustrating a specific mode of the simulation control means. As shown in Fig. 12, the simulation control means is made up of a simulation control program that controls the simulation, and a computer. The computer is made up of an OS (Operating System) and computer hardware. Note that the computer hardware is hardware for executing programs and the OS, including a CPU, memory, etc.

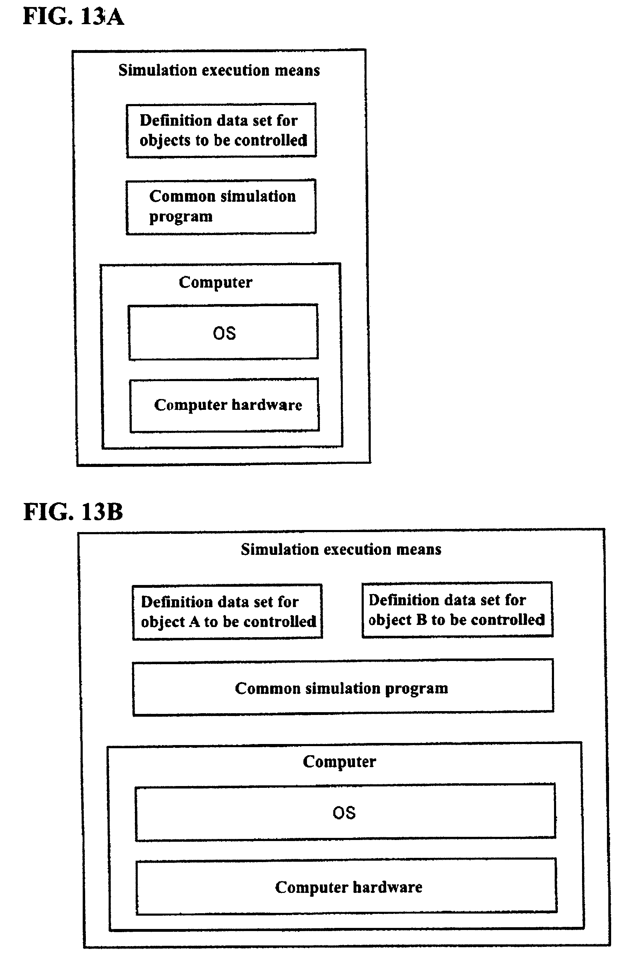

Figs. 13A and 13B are diagrams illustrating a first mode of the simulation execution means. Fig. 13A is a first example of the first mode, and Fig. 13B is a second example of the first mode.

As shown in Fig. 13A, the simulation execution means is made up of a definition data set for objects to be controlled, a common simulation program that is the same for each of the objects to be controlled, and a computer. Note that this computer is also made up of an OS and computer hardware. The OS and the computer hardware may be the same as the OS and the computer hardware of the simulation control means (Fig. 12). According to this configuration, the definition data set for the objects to be controlled is to be replaced when the objects to be simulated are changed.

As shown in Fig. 13B, the simulation execution means may include a definition data set for each of a plurality of objects to be controlled (a definition data set for an object A to be controlled, a definition data set for an object B to be controlled), a common simulation program that is the same for each object to be controlled, and a computer. When this configuration is adopted, a plurality of objects to be controlled can be simulated at the same time.

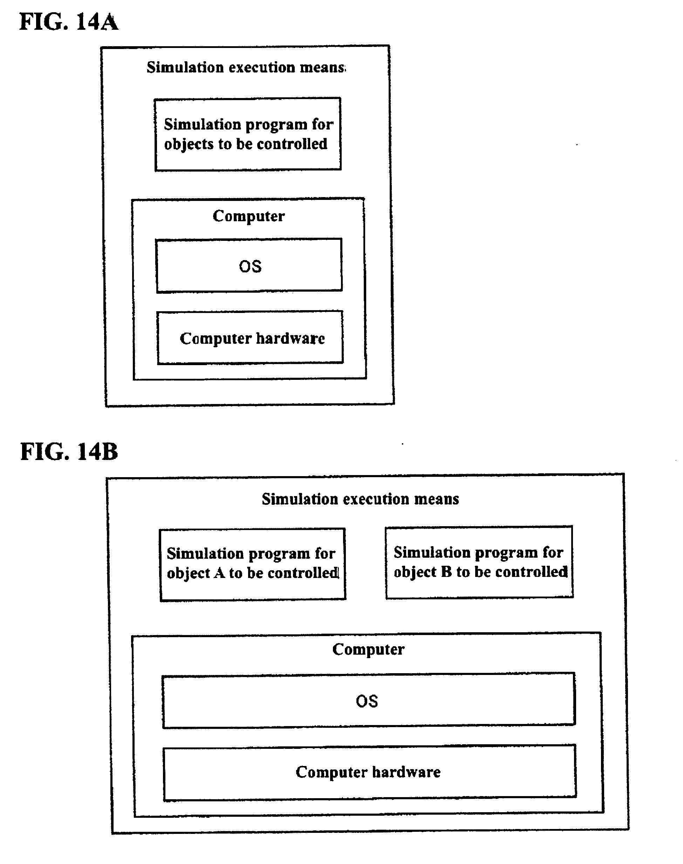

Figs. 14A and 14B are diagrams illustrating a second mode of the simulation execution means. Fig. 14A is a first example of the second mode, and Fig. 14B is a second example of the second mode.

As shown in Fig. 14A, the simulation execution means is made up of a simulation program for objects to be controlled, and a computer. Note that this computer is also made up of an OS and computer hardware. The OS and the computer hardware may be the same as the OS and the computer hardware of the simulation control means (Fig. 12). According to this configuration, the simulation program for the objects to be controlled is replaced when the objects to be simulated are changed.

As shown in Fig. 14B, the simulation execution means may include a simulation program for each of a plurality of objects to be controlled (a simulation program for an object A to be controlled, a simulation program for an object B to be controlled), and a computer. When this configuration is adopted, a plurality of objects to be controlled can be simulated at the same time.

### <B. Configuration of PLC System>

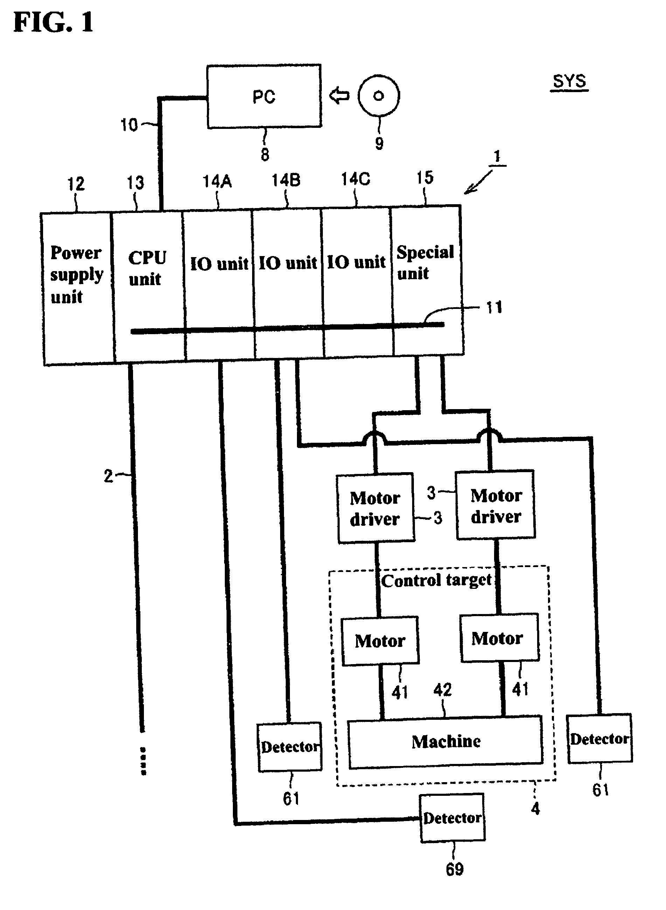

Fig. 1 is a schematic diagram showing an overall configuration of a PLC system according to an embodiment of the present invention. As shown in Fig. 1, a PLC system SYS includes a PLC 1, a field network 2, motor drivers 3, motors 41, a machine 42, detectors 61, and a detector 69. To the PLC 1, a PC 8 is connected via a connection cable 10 and so on. The motors 41 are stepper motors (pulse motors), for example.

The PLC 1 includes a CPU unit 13, which executes primary calculation processing, IO units 14A, 14B, and 14C, and a special unit 15. These units are configured to be able to exchange data with each other via a PLC system bus 11. These units are supplied with electric power having an appropriate voltage by a power supply unit 12. In the following, when the IO units 14A, 14B, and 14C are not distinguished from each other and any one of the IO units is referred to, it will be denoted as "IO unit 14". The IO unit 14 is a unit relating to input/output processing, and manages data input/output.

The special unit 15 has functions that are not supported by the IO unit 14, such as analogue data input/output, temperature control, and communication by a particular communication method. According to the present embodiment, the special unit 15 outputs pulses. The special unit 15 is a type of IO unit in the broad sense.

The field network 2 transmits various sorts of data exchanged with the CPU unit 13. Typically, various sorts of industrial Ethernet (TM) may be used as the field network 2.

Although Fig. 1 shows an example of the PLC system SYS having both the PLC system bus 11 and the field network 2, a system configuration equipped with only one of them may be adopted. For example, all the units may be connected by the field network 2.

The motor drivers 3 are connected with the special unit 15 via the PLC system bus 11, and drive the motors 41 according to command values from the CPU unit 13. More specifically, the motor drivers 3 receive command values such as a position command value, a speed command value, and a torque command value from the PLC 1 in cycles. Specifically, the motor drivers 3 receive the command values from the CPU unit 13 via the PLC system bus 11 and the special unit 15.

The detectors 61 are communicatively connected with the IO unit 14B. The detectors 61 are position sensors (rotary encoders) or torque sensors, for example. The detectors 61 detect various sorts of values relating to the operations of the machine 42, such as the position, the speed (typically calculated from the difference between the present position and the previous position), and the torque. The detectors 61 transmit the detected values (actual measurement values) to the IO unit 14B. In this case, the IO unit 14B transmits the actual measurement values to the CPU unit 13.

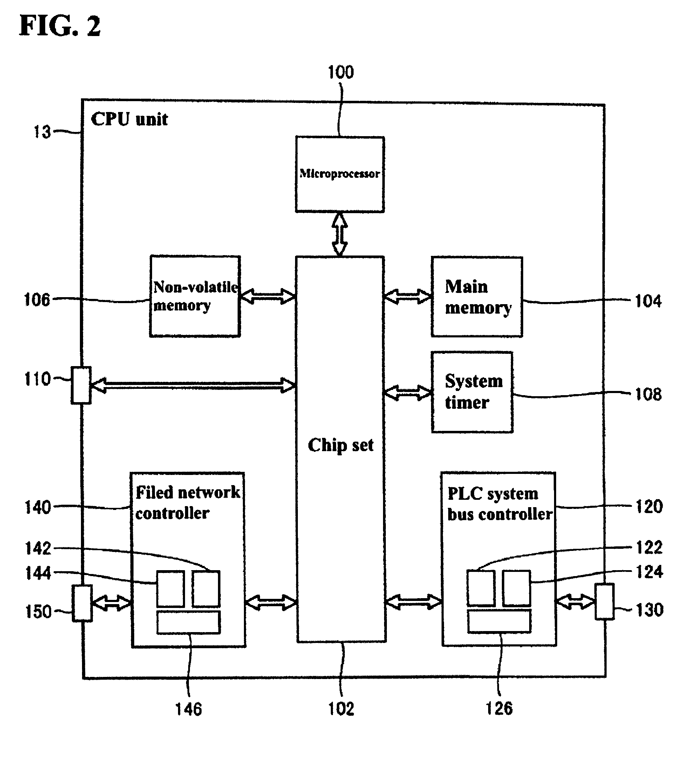

The CPU unit 13, upon receiving the actual measurement values from the IO unit 14B, corrects the command values to be subsequently transmitted, with reference to standard values, based on the actual measurement values. In other words, the CPU unit 13 performs feedback control by using the actual measurement values acquired from the detectors 61. For example, the CPU unit 13 performs PID (Proportional Integral Derivative) control. The details of the CPU unit 13 will be described later with reference to Fig. 2.

The detector 69 is communicatively connected with the IO unit 14A. The detector 69 detects, for example, whether or not a work to be processed by the machine 42 reaches a predetermined position. The detector 69 transmits the detection result (ON or OFF) to the IO unit 14A. Note that the IO unit 14A transmits the detection result received from the detector 69 to the CPU unit 13 via the PLC system bus 11.

Although Fig. 1 shows an example of a system in which the stepper motors (motors 41) and the stepper motor drivers (motor drivers 3) are combined, other configurations, for example a system in which servomotors and servomotor drivers are combined may be adopted.

Examples of an object 4 to be controlled, to which the PLC system SYS is applied, include various apparatuses, such as a packing machine, a masking apparatus, a baking furnace, and a wafer cassette having a moving chamber and a plurality of processing chamber.

The PC 8 provides (i) its functions as a support apparatus for the PLC 1, and (ii) an algorithm development environment employing block diagrams for multi-domain simulation and MBD (Model Based Design). As the environment, a graphical editor, customizable block libraries, and solvers for the purpose of modeling of a dynamic system, and simulation can be given as examples. This environment is provided by, for example, a software product such as Simulink (TM) of The MathWorks, Inc.

### <C. Hardware Configuration>

### (c1. CPU Unit 13)

Next, with reference to Fig. 2, a description is given of the hardware configuration of the CPU unit 13. Fig. 2 is a schematic diagram showing a configuration of the hardware of the CPU unit 13 according to the embodiment of the present invention. As shown in Fig. 2, the CPU unit 13 includes a microprocessor 100, a chip set 102, a main memory 104, a non-volatile memory 106, a system timer 108, a PLC system bus controller 120, a field network controller 140, and a USB connector 110. The chip set 102 and each of the other components are connected via a bus selected from various buses.

The CPU unit 13 has a main memory 104 and a non-volatile memory 106, which serve as a storage means. The main memory 104 is a volatile storage area (RAM), and holds various sorts of programs to be executed in the microprocessor 100 after the CPU unit 13 is powered ON. The non-volatile memory 106 stores data such as a real-time OS (Operating System) and the system programs, user programs, motion calculation program, and system setting parameters of the PLC 1 such that the data will be non-volatile. The system timer 108 generates an interruption signal in cycles, and provides it to the microprocessor 100.

The CPU unit 13 has the PLC system bus controller 120 and the field network controller 140, which serve as a communication circuit. A buffer memory 126 serves as a transmission buffer for the data to be output to the other units via the PLC system bus 11 shown in Fig. 1 (this data hereinafter may also be referred to as "output data"), and as a reception buffer for the data to be input from the other units via the PLC system bus 11 (this data hereinafter may also be referred to as "input data"). A DMA control circuit 122 forwards the output data from the main memory 104 to the buffer memory 126, and forwards the input data from the buffer memory 126 to the main memory 104. A PLC system bus control circuit 124 performs processing for transmitting the output data from the buffer memory 126 to the other units connected to the PLC system bus 11, and processing for receiving the input data from the other units connected to the PLC system bus 11 and storing the input data into the buffer memory 126.

The field network controller 140 controls data exchange via the field network 2 shown in Fig. 1. A DMA control circuit 142 forwards the output data from the main memory 104 to a buffer memory 146, and forwards the input data from a buffer memory 146 to the main memory 104. A field network control circuit 144 performs processing for transmitting the output data from the buffer memory 146 to the other apparatuses connected to the field network 2, and processing for receiving the input data from the other apparatuses connected to the field network 2 and storing the input data into the buffer memory 146. The

USB connector 110 is an interface for connecting the PC 8 and the CPU unit 13.

### (c2. PC 8)

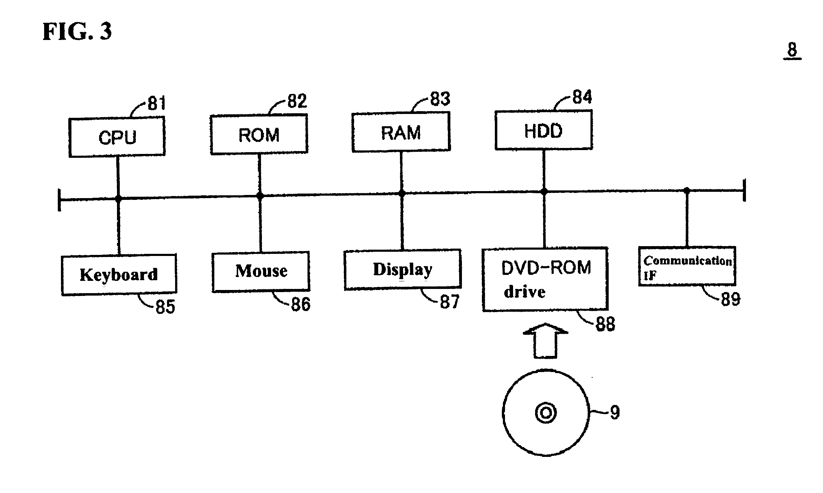

Fig. 3 is a schematic diagram showing a configuration of the hardware of the PC 8, which is, when used, connected to the CPU unit 13 according to the embodiment of the present invention. As shown in Fig. 3, the PC 8 is typically made up of a general-purpose computer. A laptop personal computer, which is highly portable, is desirable from the viewpoint of the maintainability.

As shown in Fig. 3, the PC 8 includes a CPU 81 that executes various sorts of programs including the OS, a ROM (Read Only Memory) 82 that stores therein the BIOS and various sorts of data, a memory RAM 83 that provides a work area for storing various sorts of data required for executing programs in the CPU 81, and a hard disk (HDD) 84 that stores therein programs, etc. to be executed in the CPU 81 such that they will be non-volatile.

The PC 8 also includes a keyboard 85 and a mouse 86 for receiving instructions from the user, and a display 87 for presenting information to the user. Furthermore, the PC 8 includes a communication interface (IF) for communicating with, for example, the PLC 1 (CPU unit 13) shown in Fig. 1.

As described later, the various sorts of programs to be executed in the PC 8 are stored in a DVD-ROM 9 and then distributed. The programs stored in the DVD-ROM 9 are read by a DVD-ROM (Digital Versatile Disc-Read Only Memory) drive 88, and are stored into the hard disk (HDD) 84 for example. Alternatively, a configuration for downloading the programs from a host computer or the like via a network may be adopted.

As described above, the PC 8 is realized by using a general-purpose computer, and therefore further details thereof will not be provided below.

### <D. Software Configuration>

### (d1. CPU Unit 13)

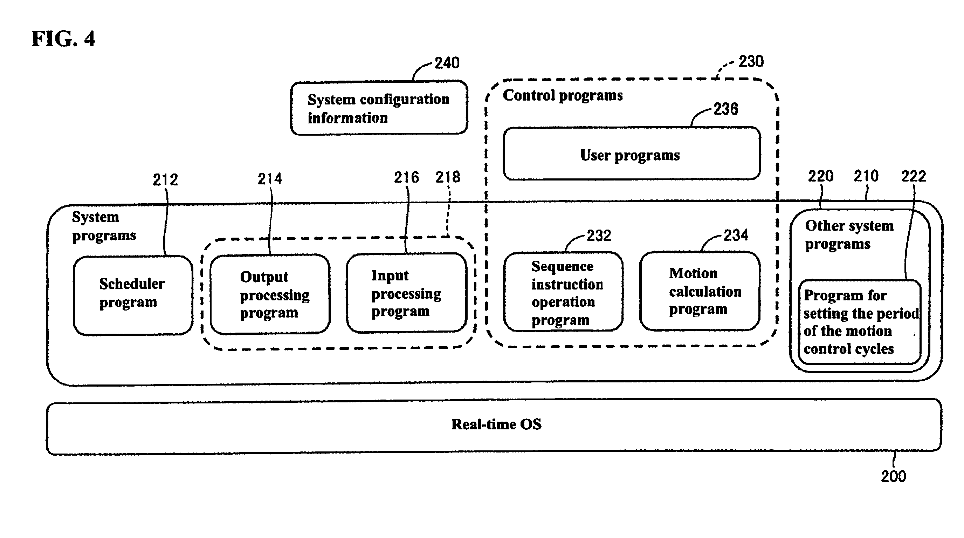

Next, with reference to Fig. 4, a description is given of software programs for providing the various sorts of functions of the CPU unit 13. The instruction codes contained in the software programs are read timely, and are executed by the microprocessor 100 of the CPU unit 13, which is shown in Fig. 2

Fig. 4 is a schematic diagram showing a configuration of the software executed in the CPU unit 13 according to the embodiment of the present invention. As shown in Fig. 4, the software programs executed by the CPU unit 13 are composed of three layers, namely the layer of a real-time OS 200, the layer of system programs 210, and the layer of a user programs 236.

The real-time OS 200 is designed according to the computer architecture of the CPU unit 13, and the microprocessor 100 provides a basic execution environment for executing the system programs 210 and the user programs 236. This real-time OS is typically provided by the manufacturer of the PLC, a specialized software company, etc.

The system programs 210 are software programs for providing the functions of the PLC 1. Specifically, the system programs 210 include a scheduler program 212, an output processing program 214, an input processing program 216, a sequence instruction operation program 232, a motion calculation program 234, and other system programs 220. Note that the output processing program 214 and the input processing program 216 are usually executed continuously (as an integrated program), and therefore these programs may be collectively referred to as "IO processing program 218".

The user programs 236 are created according to the user's control objective. In other words, they are programs that are freely designed according to the lines (processes) to be controlled by using the PLC system SYS.

As descried later, the user programs 236 achieve the user's control objective by cooperating with the sequence instruction operation program 232 and the motion calculation program 234. In other words, the user programs 236 achieve the programmed operation by utilizing the instructions, functions, functional modules, and so on provided by the sequence instruction operation program 232 and the motion calculation program 234. Therefore, the user programs 236, the sequence instruction operation program 232 and the motion calculation program 234 may be collectively referred to as "control programs 230".

As described above, the microprocessor 100 of the CPU unit 13 executes the system programs 210 and user programs 236 stored in the storage means.

The following provides further detailed description of each program. As described above, the user programs 236 are created according to the user's control objective (such as lines and processes to be controlled). The user programs 236 are typically in the form of object programs that can be executed by the microprocessor 100 of the CPU unit 13. These user programs 236 are generated by, in PC 8, etc., compiling source programs written in a language defined by IEC (International Electrotechnical Commission) 61131-3 standard, such as ST (Structured Text) language. The user programs 236 in the form of the object programs thus generated are transferred from the PC 8 to the CPU unit 13 via the connection cable 10, and are stored in the non-volatile memory 106, etc.

The scheduler program 212 controls, for each of the output processing program 214, the input processing program 216, and the control programs 230, the start of the processing, and the resuming of the processing after a pause of the processing, in each execution cycle. More specifically, the scheduler program 212 controls the execution of the user programs 236 and the motion calculation program 234.

The output processing program 214 reallocates the output data generated by the execution of the user programs 236 (control programs 230) in the form that is suitable for being transferred to the PLC system bus controller 120 and/or the field network controller 140. When the PLC system bus controller 120 or the field network controller 140 requires an instruction from the microprocessor 100 in order to execute the transmission, such an instruction is output by the output processing program 214.

The input processing program 216 reallocates the input data received by the PLC system bus controller 120 and/or the field network controller 140, in the form that is suitable for being used by the control programs 230.

The sequence instruction operation program 232 is a program that is called when a certain type of sequence instruction used by the user programs 236 is to be executed, and that is executed in order to realize the contents of the instruction.

The motion calculation program 234 is a program that is executed according to an instruction made by the user programs 236, and that calculates a command value to be output to motor drivers such as the motor drivers 3 or pulse motor drivers.

The other system programs 220 represent a group of programs for achieving various functions of the PLC 1 other than the programs individually shown in Fig. 4. The other system programs 220 include a program 222 for setting the period of the motion control cycles.

### (d2. PC 8)

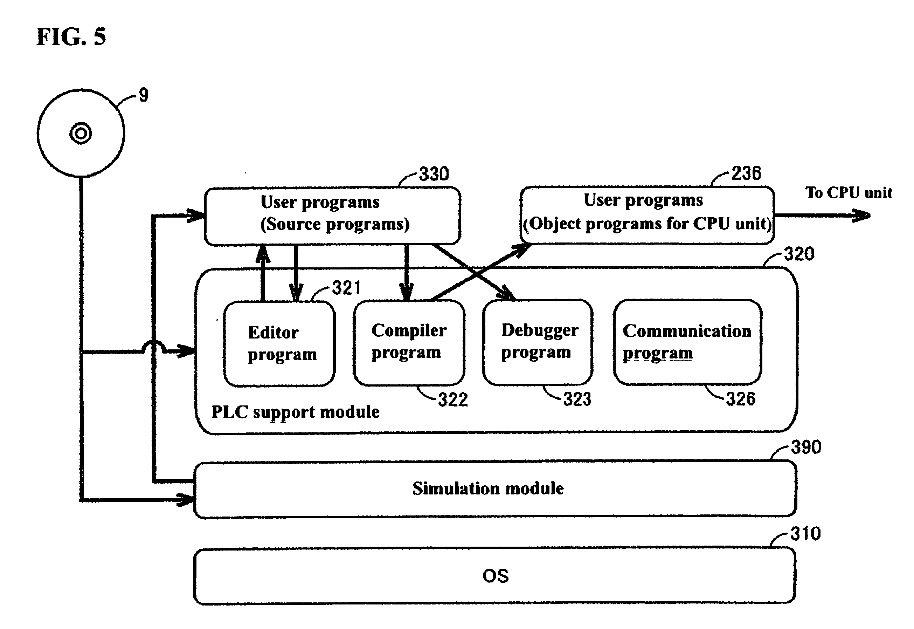

Fig. 5 is a schematic diagram showing a configuration of the software of the PC 8, which is, when used, connected to the CPU unit 13 according to the embodiment of the present invention. As shown in Fig. 5, in PC 8, an OS 310 is executed to provide an environment for enabling execution of various programs included in a PLC support module 320 and various programs included in a simulation module.

The PLC support module 320 includes an editor program 321, a compiler program 322, a debugger program 323, and a communication program 326. Each of these programs included in the PLC support module 320 is typically distributed in the state of being stored in the DVD-ROM 9, and is then installed in the PC 8.

The editor program 321 provides the function for generating the user programs 236 in the form of executable object programs, such as the functions of inputting and editing. More specifically, the editor program 321 provides the function of enabling the user to create, by operating the keyboard 85, the mouse 86, etc., user programs 330, which are in the form of the source programs of the user programs 236, as well as the function of storing and editing the user programs 330 thus created. The editor program 321 receives the user programs 330 input from the outside.

The compiler program 322 provides the function of compiling the user programs 330 and generating the user programs 236 in the form of object programs that are executable by the microprocessor 100 of the CPU unit 13.

The debugger program 323 provides the function for debugging the source programs of user programs. This debugging includes operations such as executing a part, specified by the user, of the source programs, and tracking the change over time of the value of the variable during the execution of the source programs.

The communication program 326 provides the function of transferring the user programs 236 to the CPU unit 13 of the PLC 1.

A simulation module 390 is made up of programs for the above-described block diagram environment (Simulink). The simulation module 390 is used for creating the user programs 330 and simulating the user programs 330. The simulation module 390 is typically distributed in the state of being stored in the DVD-ROM 9, and is then installed in the PC 8.

### <E. Data Processing in PLC system SYS>

### (e1. Outline of Processing)

Before a description of the details of the processing, a description is given of an outline of the data processing in the PLC system SYS.

The PC 8 receives, from the CPU unit 13, the command value transmitted from the PLC 1 to the object 4 to be controlled (or to be exact, the command value transmitted by the CPU unit 13 from the special unit 15 to the motor drivers 3). In this regard, the PC 8 receives the command value together with the identification information of the command value, in order to make it possible to identify the command value type (position command value, speed command value, the torque command value, etc.) Furthermore, the PC 8 acquires, from the PLC 1, the results of the control of the object 4 to be controlled, based on the command value. Specifically, the PC 8 receives the results of the control transmitted from the detectors 61 to the CPU unit 13 via the IO unit 14B when the object 4 to be controlled operates based on the command value.

The PC 8 executes simulation by inputting the command value transmitted from the PLC 1 to the object 4 to be controlled into the model of the object 4 to be controlled. Note that the model of the object 4 to be controlled has a configuration for, when a value of the variable is input, performing an output according to the input value. The model of the object 4 to be controlled is typically described by a function. Note that each of the models described below other than the model of the object 4 to be controlled typically has a configuration for performing an output according to an input.

Furthermore, the PC 8 causes the display 87 to display the results of the control described above and the results of the simulation described above.

Here, a comparison is made between the case of executing a simulation by using the command value output by the PLC 1, and the case of executing a simulation by transmitting (outputting) the command value from the model of the PLC 1 (or to be exact, the model (e.g. the model in Simulink) prepared in the PC 8 for the simulation with respect to the CPU unit 13) to the model of the object 4 to be controlled.

The command value transmitted from the model of the PLC 1 to the model of the object 4 to be controlled does not necessarily match the command value transmitted from the PLC 1 (actual apparatus) to the object 4 to be controlled (actual apparatus). This is because the PLC 1 (actual apparatus) transmits a corrected command value to the object 4 to be controlled by performing feedback control.

For this reason, in the case of the configuration for executing a simulation by transmitting the command value from the model of the PLC 1 to the model of the object 4 to be controlled, it is difficult for the user to create (correct) with high accuracy the model of the object to be controlled, even if the control results and the simulation results of the actual apparatuses are compared with each other.

In contrast, in the case of executing a simulation by using the command value output by the PLC 1 as described above, the user can more closely approximate the model of the object 4 to be controlled to the object 4 to be controlled as an actual apparatus than in the case of the configuration for transmitting the command value from the model of the PLC 1 to the model of the object 4 to be controlled.

In other words, the user can check the difference between the object 4 to be controlled as an actual apparatus and a model M4 of the control-target object with high accuracy. Consequently, the user can create a model of the object 4 to be controlled with high accuracy.

Furthermore, since the user can acquire an accurate model as described above, the user can more appropriately set the values of the control parameters (the parameters for the PID control) for the PLC 1 in the model of the PLC 1 of the PC 8 than in the case where an accurate model cannot be acquired. In this case, the set values are transferred to the PLC 1 as an actual apparatus, and the set values are used in the PLC 1 as well as the values of the parameters. Therefore, it is possible to enable the actual apparatus to perform the operations intended by the user.

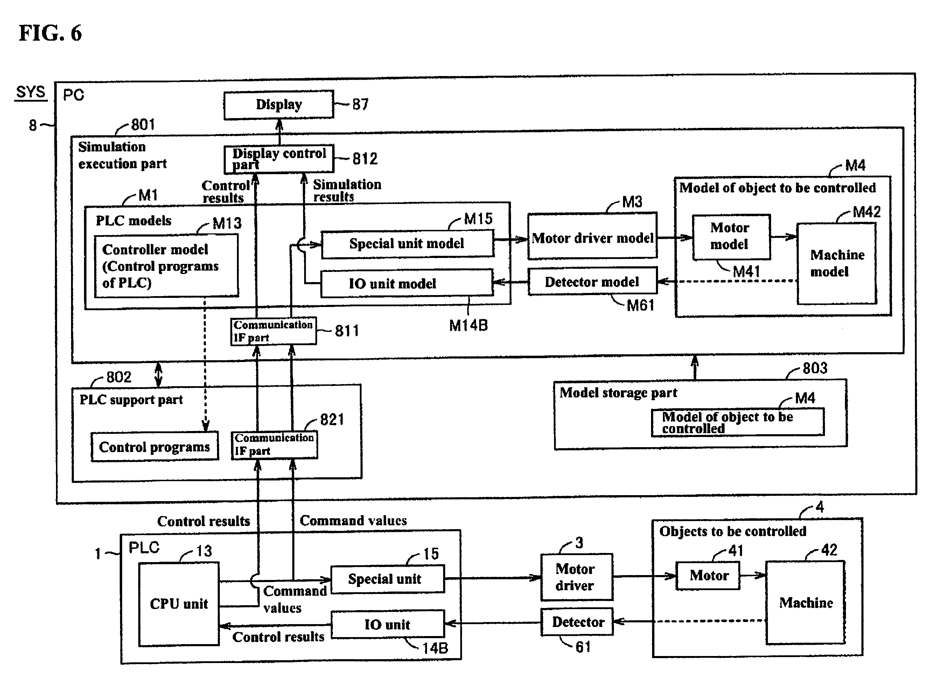

The following describes the details of the data processing, based on Fig. 6 to Fig. 10.

### (e2. Functional Configuration)

Fig. 6 is a block diagram illustrating the functional configuration of the PLC system SYS. As shown in Fig. 6, the PLC system SYS includes the PLC 1, the PC 8, the motor driver 3, the object 4 to be controlled, and the detector 61.

The PLC 1 includes, as described above, at least the CPU unit 13, the special unit 15, and the IO unit 14B. The CPU unit 13, the special unit 15, and the IO unit 14B are, as described above, communicatively connected by the PLC system bus 11 (not shown in Fig. 6) (Fig. 1). The object 4 to be controlled includes the motor 41 and the machine 42.

The PC 8 includes the display 87, a simulation execution part 801, a PLC support part 802, and a model storage part 803. The simulation execution part 801 includes a communication IF part 811, a display control part 812, and simulation models for actual apparatuses in the PLC system SYS. As the models, the simulation execution part 801 includes models M1 for simulating the PLC 1 (hereinafter referred to as "PLC models M1"), a model M3 for simulating the motor driver 3 (hereinafter referred to as "motor driver model M3"), a model M61 for simulating the detector 61 (hereinafter referred to as "detector model M61"), and models M4 for simulating the objects 4 to be controlled (hereinafter referred to as "models M4 of the objects to be controlled").

The PLC models M1 include a model M13 for the simulation corresponding to the control programs of the PLC 1 (hereinafter referred to as "controller model M13"), and a model M15 for simulating the special unit 15 (hereinafter referred to as "special unit model M15"), and a model M14B for simulating the IO unit 14B (hereinafter referred to as "IO unit model M14B").

The models M4 of the objects to be controlled include a model M41 for simulating the motor 41 (hereinafter referred to as "motor model M41"), and a model M42 for simulating the machine 42 (hereinafter referred to as "machine model M42").

The PLC support part 802 is a block for executing the functions as the support apparatus for the PLC 1. The PLC support part 802 includes control programs and a communication IF part 821.

The communication IF part 821 is an interface for communication with the PLC 1 (specifically, the CPU unit 13) and the communication IF part 811 of the simulation execution part 801.

The display control part 812 performs various kinds of rendering on the display 87, such as graph rendering. The following provides a description of the operations of each part of the PLC system SYS.

### <Operations>

The CPU unit 13 transmits command values to the motor driver 3 via the special unit 15 by executing the control programs 230 (Fig. 4). For example, the CPU unit 13 transmits a command value at intervals of one millisecond (one msec). The motor driver 3 controls the operations of the motor 41 based on the received command value. As a result, the machine 42 (e.g. the arm of the machine 42) operates.

The detector 61 detects various values relating to the operations of the motor 41, as described above. The detector 61 transmits the control results as the detected values (actual measurement values) to the IO unit 14B. The IO unit 14B transmits the control results to the CPU unit 13. The CPU unit 13 performs the feedback control by using the control results.

In the case where a simulation is executed based on an instruction from the user (in the case of a simulation mode), the PLC support part 802 acquires command values, which have been transmitted to the motor driver 3, from the CPU unit 13 via the communication IF part 821. The communication IF part 821 transmits the command values to the simulation execution part 801.

More specifically, at intervals of a time period (e.g. two seconds) that is longer than the transmission intervals (one millisecond) of the command values to the special unit 15, the command values that have been transmitted to the special unit 15 during the time period (two seconds) are transmitted all at once to the communication IF part 821. Since the number of command values transmitted during a two-second period at intervals of one millisecond is 2000 (= 2 sec/1 msec), the communication IF part 821 acquires 2000 command values at a time. As a result, the simulation execution part 801 receives 2000 command values at intervals of two seconds.

Furthermore, the control results received from the IO unit 14B are transmitted to the communication IF part 821 at intervals of two seconds. Specifically, the communication IF part 821 acquires 2000 control results (actual measurement values) at intervals of two seconds, which correspond to 2000 command values received during the two-second period. The communication IF part 821 transmits, to the simulation execution part 801, the control results received from CPU unit 13.

As described above, the PLC support part 802 acquires the command values and the control results from the CPU unit 13 via the communication IF part 821 at fixed intervals. More specifically, the CPU unit 13 has the function of logging the values of the variables such as the command values at intervals of a predetermined time period (one millisecond in this embodiment), and the PLC support part 802 reads the logging data of the CPU unit 13 at intervals of a predetermined time period (two seconds in this embodiment).

Note that the CPU unit 13 may transmit the command values and the control results to the communication IF part 821 at the same time, or transmit them separately. Also, the CPU unit 13 may be configured to sequentially transmit the control results to the communication IF part 821 instead of transmitting them together at intervals of two seconds.

Next, a description is given of the operations of the simulation execution part 801. The communication IF part 811 receives the command values and the control results transmitted from the CPU unit 13 via the communication IF part 821. In other words, the communication IF part 811 receives each of the set of the command values and the set of the control results at intervals of two seconds. Specifically, the communication IF part 811 acquires, from the CPU unit 13, each of the command values transmitted from the CPU unit 13 of the PLC 1 during two seconds, and each of the control results transmitted from the detector 61 to the CPU unit 13 via the IO unit 14B during two seconds. The communication IF part 811 transmits the control results (i.e., actual measurement values) to the display control part 812.

The simulation execution part 801 uses, as command values for simulation, the command values received by the communication IF part 811. In other words, the simulation execution part 801 executes simulation of the actual apparatuses by using the received command values and the models of the actual apparatuses. In this regard, the simulation execution part 801 uses, as the command values for a simulation, the 2000 command values received at a time, in the order from the oldest to the newest in terms of the time of transmission from the CPU unit 13 to the special unit 15.

Specifically, the simulation execution part 801 transmits the received command values to the special unit model M15, and the special unit model M15 transmits the command values to the motor driver model M3. The motor driver model M3 controls the motor model M41 by using the received command values. The detector model M61 acquires the various outputs from the machine model M42, and transmits the output values to the IO unit model M14B, as the simulation results. The IO unit model M14B transmits the simulation results to the display control part 812.

The display control part 812 causes the display 87 to display, in a predetermined display mode, the control results received from the communication IF part 811 and the simulation results (i.e., the simulation results received from the IO unit model M14B). The user can correct the machine model M42 by referencing the display.

The display control part 812 may be configured to associate, with the control results and the simulation results, the command values leading to the results and to cause the display to display them. The data to be displayed is determined based on an instruction from the user.

Further details are as follows. The CPU unit 13 outputs many types of command values (command values with respect to a plurality of variables (input variable, etc.)). For example, regarding the command values transmitted from the CPU unit 13 to the special unit 15, there are various types of command values for each of the plurality of motor drivers 3, such as the position command value, the speed command value, and the torque command value.

However, in the case of executing a simulation in the PC 8, not all the types of command values are necessary. From this point of view, the simulation execution part 801 has the following configuration. The simulation execution part 801 receives an input operation for specifying the variables to be input to the models M4 of the objects to be controlled (or to be exact, the motor model M41) from among a plurality of variables. The simulation execution part 801 acquires the command values for the specified variables and the control results corresponding to the command values, from the PLC 1 via the PLC support part 802.

According to this configuration, the PC 8 can acquire only the command values for the variables that are required for executing a simulation, and the control results based on the command values. Therefore, the PC 8 can avoid acquiring unnecessary data.

### (e3. Control Configuration)

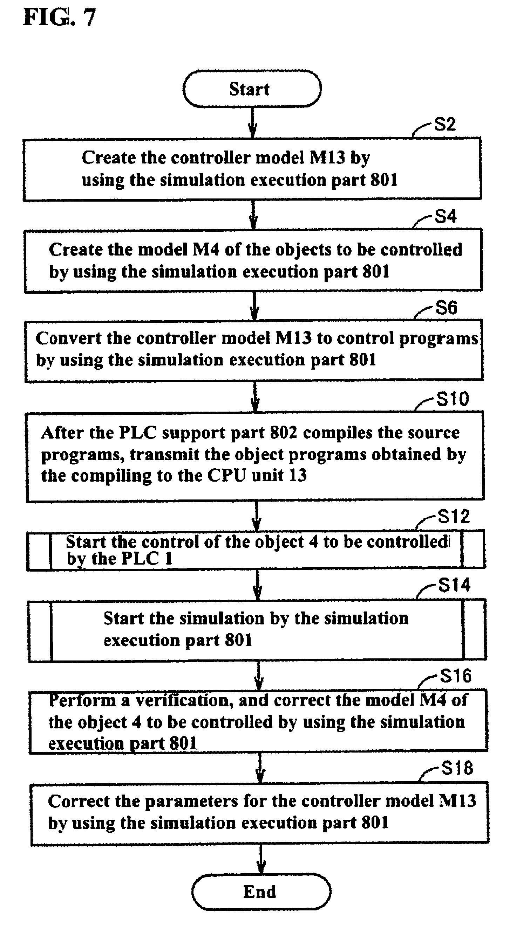

Fig. 7 is a flowchart illustrating various processes executed by the PLC system SYS in response to a user instruction. As shown in Fig. 7, at Step S2, the user creates the controller model M13 by using the simulation execution part 801 of the PC 8. When the controller model M13 has already been created, the process at Step S2 is unnecessary.

At Step S4, the user creates the models M4 of the objects to be controlled (the models of the objects 4 to be controlled for the simulation) by using the simulation execution part 801. At Step S6, the simulation execution part 801 converts the controller model M13 into control programs. Thus, the PLC support part 802 acquires the source program of the controller model M13. At Step S10, the PLC support part 802 compiles the source program, and transmits the object program obtained by the compiling, to the CPU unit 13.

At Step S12, the control of the objects 4 to be controlled by the PLC 1 is started based on the user instruction. In other words, operations in the actual apparatuses are started. At Step S14, the PC 8 starts simulation by the simulation execution part 801, based on the user instruction.

At Step S16, the user checks (verifies) the control results (actual measurement values) and the simulation results, and corrects the models M4 of the objects to be controlled (in particular, the machine model M42) by using the simulation execution part 801. Also, at Step S18 as needed, the user corrects the values of the parameters for the controller model M13 by using the simulation execution part 801. Specifically, the user changes the control parameters for the PID control.

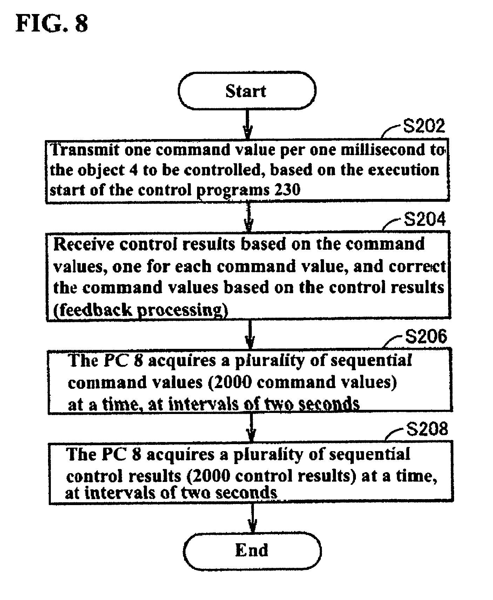

Fig. 8 is a flowchart illustrating the details of the process performed at Step S12 of Fig. 7. As shown in Fig. 8, at Step S202, the CPU unit 13 transmits one command value per 1 millisecond to the objects 4 to be controlled, based on the start of the execution of the control programs 230 (Fig. 4). Specifically, the CPU unit 13 causes the machine 42 to operate by controlling the motor 41 by using the command values.

At Step S204, the CPU unit 13 receives, for each command value, the control result (actual measurement value) that is based on the command value, and corrects the command value based on the control result. In other words, the CPU unit 13 sequentially receives the control results from the detector 61 via the IO unit 14B, and performs the feedback control.

At Step S206, the PC 8 acquires 2000 sequential command values (command values transmitted during two seconds) at a time, at intervals of two seconds. At Step S208, the PC 8 acquires 2000 sequential control results (actual measurement values) at a time, at intervals of two seconds.

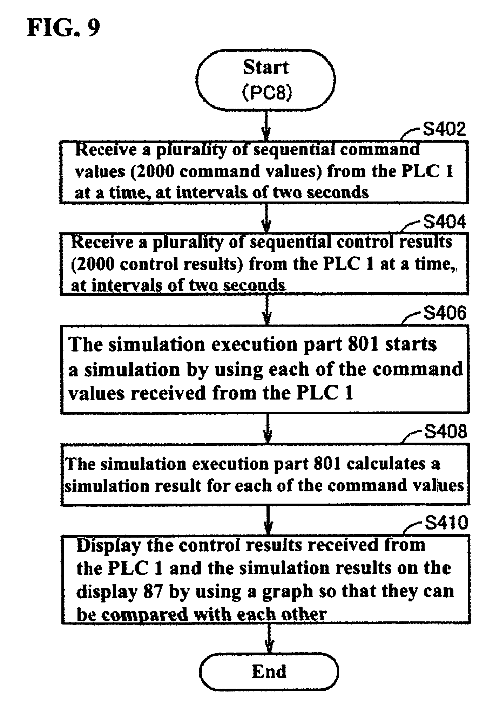

Fig. 9 is a flowchart illustrating the details of the process performed at Step S 14 of Fig. 7. As shown in Fig. 9, at Step S402, the PC 8 receives the sequential command values from the PLC 1 (specifically, the CPU unit 13) at intervals of two seconds. At Step S404, the PC 8 receives the sequential control results from the PLC 1 (specifically, the CPU unit 13) at intervals of two seconds.

At Step S406, the simulation execution part 801 starts the simulation by using each of the command values received from the PLC 1. At Step S408, the simulation execution part 801 calculates the simulation result for each command value. At Step S410, the simulation execution part 801 causes the display 87 to display the control results (actual measurement values) received from the PLC 1 and the simulation results by using a graph in such a manner that they can be compared with each other.

### (e4. User Interface)

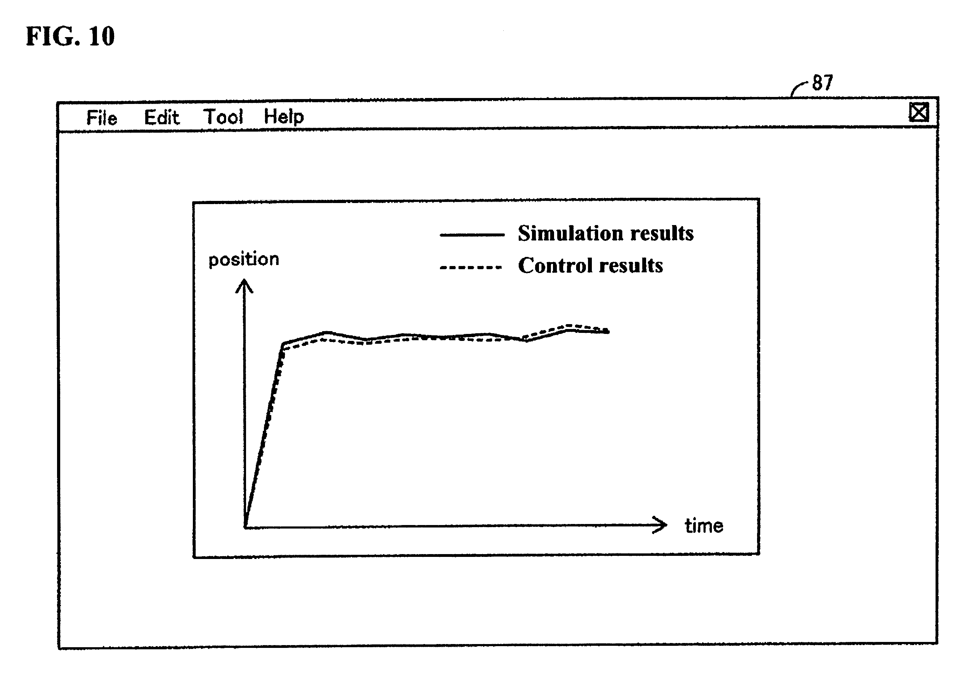

Fig. 10 is a diagram illustrating an example of an image to be displayed by the display 87. As shown in Fig. 10, the simulation execution part 801 of the PC 8 renders the control results and the simulation results on a single graph. Note that in the PLC system SYS, the control results and the simulation results correspond one to one, because they are based on the same command values. For this reason, it is easy to render the graph so that the starting points of them coincide on the time axis. Therefore, the user can easily compare the control results with the simulation results.

### (e5. Comparison with Comparative Example)

Next, the PLC system SYS is compared with another configuration. For example, the following shows a possible configuration for reading the command values and the control results, which are stored for achieving the traceability, etc., from the PLC by using a memory card.

Usually, the command values and the control results are stored in a predetermined file together with other pieces of data. Typically, the command values and the control results are stored in the CSV (Comma-Separated Values) format, together with various pieces of data such as time and date data.

According to such a configuration, when executing a simulation in the PC 8, the user needs to perform an operation for copying the CSV format file to the PC 8 by using a memory card or the like. Furthermore, the user needs to find the necessary data (the command values and the control results) from the CSV format file in the PC 8, copy the data, and paste the data to another file.

In other words, there are many operational steps that need to be performed by the user, and this is inconvenient for the user. In particular, when the correction of the machine model M42 cannot be completed at a time, it is required to repeat the operational steps again and again.

In contrast, using the above-described PLC system SYS eliminates the necessity of the operational steps described for the above configuration as a comparative example. Therefore, the PLC system SYS is significantly useful compared to the comparative example.

The embodiment disclosed herein is to be considered in all respects as illustrative, and not restrictive. The scope of the present invention is indicated by the claims, rather than by the above description, and is intended to embrace all changes that come within the meaning and scope of equivalency of the claims.

### LIST OF REFERENCE NUMERALS

- 2: Field network
- 3: Motor driver
- 4: Object to be controlled
- 8: PC
- 10: Connection cable
- 11: PLC system bus
- 12: Power supply unit
- 13: CPU unit
- 14, 14B, 14C: IO unit
- 15: Special unit
- 41: Motor
- 42: Machine
- 61, 69: Detector
- 87: Display
- 100: Microprocessor
- 102: Chip set
- 104: Main memory
- 106: Non-volatile memory
- 230: Control programs
- 236, 330: User program
- 320: Support module
- 321: Editor program
- 322: Compiler program
- 323: Debugger program
- 326: Communication program
- 390: Simulation module
- 801: Simulation execution part
- 802: PLC support part
- 803: Model storage part
- 811, 821: Communication IF part
- 812: Display control part
- SYS: PLC system

## Claims

1. An information processing apparatus (SYS) for simulating an operation of an object (4) to be controlled by a control apparatus (1) and for causing display means (87) to display a simulation result, the information processing apparatus (SYS) comprising:
simulation means (801) for receiving an input of a series of simulation command values, calculating a series of simulation values of a position or speed of the object (4) to be controlled operating in response to the series of simulation command values, and outputting the series of simulation values;
control means (802, 812) for providing the simulation means (801) with the series of simulation command values and causing the display means (87) to display the series of simulation values output by the simulation means (801); and
communication means (811, 821) for communicating with the control apparatus (1),
wherein the control means (802, 812) is furthermore configured:
to acquire a series of actual command values and a series of actual values of the position or speed of the object (4) to be controlled from the control apparatus (1) via the communication means (821), the series of actual command values being output by the control apparatus (1) at predetermined intervals in control cycles for controlling the operation of the object (4) to be controlled, and the series of actual values being acquired by the control apparatus (1) at the predetermined intervals in the control cycles;
to provide the simulation means (801) with the series of actual command values serving as the series of simulation command values; and
to cause the display means (87) to display the series of actual values in a mode where the series of actual values can be compared with the series of simulation values calculated by the simulation means (801) using the series of actual command values.

2. The information processing apparatus (SYS) according to claim 1,
wherein the control apparatus (1) is configured to transmit the series of actual command values to the object (4) to be controlled at intervals of a first time period, and
the control means (802) acquires, from the control apparatus (1), the series of actual command values and the series of actual values at intervals of a second time period that is longer than the first time period, the series of actual command values and the series of actual values being transmitted from the control apparatus (1) during the second time period.

3. The information processing apparatus (SYS) according to claim 1 or 2,
wherein the control apparatus (1) transmits, to the object (4) to be controlled, the series of command values with respect to a plurality of variables, and
the control means (802) is configured:
to receive an input operation for specifying, from among the plurality of variables, a variable to be input to a model; and
to acquire, from the control apparatus (1), the series of actual command value with respect to the specified variable and the series of actual values that are based on the series of actual command values.

4. The information processing apparatus (SYS) according to any one of claims 1 to 3,
wherein the control means (812) is configured to cause the display means (87) to display a graph showing the series of simulation values and the series of actual values in association with the series of actual command values.

5. The information processing apparatus (SYS) according to any one of claims 1 to 4,
wherein the control means (802) includes a computer and a simulation control program executed by the computer.

6. The information processing apparatus (SYS) according to any one of claims 1 to 4,
wherein the simulation means (801) includes a computer, a simulation program executed by the computer, and data defining the object (4) to be controlled.

7. The information processing apparatus (SYS) according to claim 6,
wherein the simulation program is a program that is the same for each of a plurality of objects (4) to be controlled, and
the simulation means (801):
has the data for each of the plurality of objects (4) to be controlled; and
is configured to calculate the series of simulation values for each of the plurality of objects (4) to be controlled and to output the series of simulation values.

8. The information processing apparatus (SYS) according to any one of claims 1 to 4,
wherein the simulation means (801) includes a computer and a simulation program for the object (4) to be controlled executed by the computer.

9. The information processing apparatus (SYS) according to claim 8,
wherein the simulation means (801):
has the simulation program for each of a plurality of objects (4) to be controlled; and
is configured to calculate the series of simulation values for each of the plurality of objects (4) to be controlled, and to output the series of simulation values.

10. An information processing method for an information processing apparatus (SYS) that simulates an operation of an object (4) to be controlled by a control apparatus (1) and that causes display means (87) to display a simulation result, the information processing method comprising:
a step of receiving an input of a series of simulation command values, calculating a series of simulation values of a position or speed of the object (4) to be controlled that operates in response to the series of simulation command values, and outputting the series of simulation values;
a step of providing simulation means (801) with the series of simulation command values and causing the display means (87) to display the series of simulation values output by the simulation means (801);
a step of communicating with the control apparatus (1);
a step of acquiring a series of actual command values and a series of actual values of the position or speed of the object (4) to be controlled from the control apparatus (1) via communication means (821), the series of actual command values being output by the control apparatus (1) at predetermined intervals in control cycles for controlling the operation of the object (4) to be controlled, and the series of actual values being acquired by the control apparatus (1) at the predetermined intervals in the control cycles;
a step of providing the simulation means (801) with the series of actual command values serving as the series of simulation command values; and
a step of causing the display means (87) to display the series of actual values in a mode where the series of actual values can be compared with the series of simulation values calculated by the simulation means (801) using the series of actual command values.

11. A program for controlling an information processing apparatus (SYS) that simulates an operation of an object (4) controlled by a control apparatus (1) and that causes display means (87) to display a simulation result, the program causing a processor of the information processing apparatus (SYS) to perform:
a step of receiving an input of a series of simulation command values, calculating a series of simulation values of a position or speed of the object (4) to be controlled that operates in response to the series of simulation command values, and outputting the series of simulation values;
a step of providing simulation means (801) with the series of simulation command values and causing the display means (87) to display the series of simulation values output by the simulation means (801);
a step of communicating with the control apparatus (1);
a step of acquiring a series of actual command values and a series of actual values of the position or speed of the object (4) to be controlled from the control apparatus (1) via communication means (821), the series of actual command values being output by the control apparatus (1) at predetermined intervals in control cycles for controlling the operation of the object (4) to be controlled, and the series of actual values being acquired by the control apparatus (1) at the predetermined intervals in the control cycles;
a step of providing the simulation means (801) with the series of actual command values serving as the series of simulation command values; and
a step of causing the display means (87) to display the series of actual values in a mode where the series of actual values can be compared with the series of simulation values calculated by the simulation means (801) using the series of actual command values.
